# EUROPÄISCHE PATENTSCHRIFT

(11) **EP 0 646 076 B1**
(45) Veröffentlichungstag und Bekanntmachung des Hinweises auf die Patenterteilung: **04.09.1996**
(21) Anmeldenummer: 93914672.6
(22) Anmeldetag: 18.06.1993
(51) Int. Cl.: B60T 8/26

(54) **ZWILLINGS-BREMSKRAFTREGLER MIT ELEKTROMAGNETISCH BETÄTIGTER SPERRVORRICHTUNG**
TWIN BRAKE PRESSURE REGULATOR WITH ELECTROMAGNETICALLY CONTROLLED LOCKING DEVICE
REGULATEUR DE FORCE DE FREINAGE JUMELE A DISPOSITIF DE BLOCAGE A COMMANDE ELECTROMAGNETIQUE

(30) Priorität: 22.06.1992 DE 4220414
(43) Veröffentlichungstag der Anmeldung: 05.04.1995
(73) Patentinhaber: ITT Automotive Europe GmbH, D-60488 Frankfurt am Main (DE)
(72) Erfinder: CEZANNE, Rudolf, D-6394 Grävenwiesbach 5 (DE)
(86) Internationale Anmeldenummer: EP9301558
(87) Internationale Veröffentlichungsnummer: WO9400321

(56) Entgegenhaltungen:
- EP-A- 0 329 333
- EP-A- 0 330 391
- DE-A- 3 431 326
- DE-A- 3 742 364
- DE-A- 4 029 332
- DE-A- 4 030 686

## Beschreibung

Die vorliegende Erfindung betrifft einen Twin-Bremskraftregler gemäß der im Oberbegriff des Hauptanspruchs genannten Gattung. Twin-Regler mit Steuerstößel und Waagebalken haben den Vorteil, daß sich alle zur Ansteuerung nötigen Elemente im druckmittelfreien Raum befinden und deswegen keiner weiteren Abdichtung bedürfen. Will man sich diesen Vorteil aber für eine elektromagnetische Sperrvorrichtung zunutze machen, sind einige Schwierigkeiten zu überwinden. Wenn die elektromagnetische Sperrvorrichtung im druckmittelfreien Raum angeordnet sein soll, dann ist es nicht möglich, wie beispielsweise in der DE 40 29 332 A1 mit der Sperrvorrichtung direkt auf das Ventilschließglied einzuwirken, um die elektromagnetischen Stellkräfte klein zu halten. Es ist vielmehr bei Twin-Reglern mit Ansteuerung über einen Waagebalken erforderlich, die Regelkolben am zur Regelung erforderlichen Hub zu hindern. So hohe Stellkräfte können aber nur von einem besonders starken und deshalb sehr kostenaufwendigen Magneten aufgebracht werden.

Daher wurde in der DE 40 30 686 A1 eine Sperrvorrichtung vorgeschlagen, bei welcher durch eine spezielle Rampenanordnung der Elektromagnet durch axiale Verschiebung mehrere Verriegelungskugeln radial verschiebt, welche den Hub des Steuerstößels zum Magneten hin blockieren. Dadurch werden ohne Axialkräfte auf den Elektromagneten die Regelkolben gesperrt, so daß keine Regelung erfolgen kann. Diese Anordnung hat aber den Nachteil, daß ein hoher Montageaufwand erforderlich ist, weil verhältnismäßig viele gegeneinander bewegliche Elemente ineinander gefügt werden müssen.

Die Aufgabe der vorliegenden Erfindung besteht daher darin, einen gattungsgemäßen Twin-Bremskraftregler mit einer elektromagnetischen Sperrvorrichtung auszurüsten, bei der nur wenige Funktionselemente benötigt werden, jedoch auf die elektromagnetische Sperrvorrichtung keine großen Axialkräfte ausgeübt werden, so daß die Anordnung preiswert herzustellen ist.

Diese Aufgabe wird erfindungsgemäß gelöst durch die Merkmale des kennzeichnenden Teils des Hauptanspruchs. Das Prinzip der Erfindung besteht also darin, die elektromagnetische Sperrvorrichtung, bestehend aus einer elektrischen Spule, einem Magnetanker und einem daran befestigten Sperrglied in Bezug auf die Achsen der Regelkolben radial anzuordnen und das Sperrglied mit dem Steuerstößel in Eingriff zu bringen. Das hat einerseits den Vorteil, daß die Hubkräfte der Regelkolben senkrecht auf die magnetischen Stellkräfte wirken. Andererseits wird durch den Eingriff am Steuerstößel eine gemeinsame Sperre für beide Regelkolben erzielt. Da nur ein Sperrglied erforderlich ist, welches zudem mit dem Magnetanker fest verbunden ist, wird der Montageaufwand gering gehalten.

Weitere vorteilhafte Ausgestaltungen ergeben sich aus den Unteransprüchen.

Eine nähere Erläuterung des Erfindungsgedankens erfolgt nun mit der Beschreibung eines bevorzugten Ausführungsbeispiels anhand von 3 Zeichnungen.

Es zeigt:
- Fig. 1: einen Schnitt durch einen erfindungsgemäßen Twin-Bremskraftregler;
- Fig. 2: einen Teilausschnitt aus einem Regler gemäß Fig. 1;
- Fig. 3: einen Teilausschnitt aus einem Regler nach Fig. 1 in einer anderen Schnittebene.

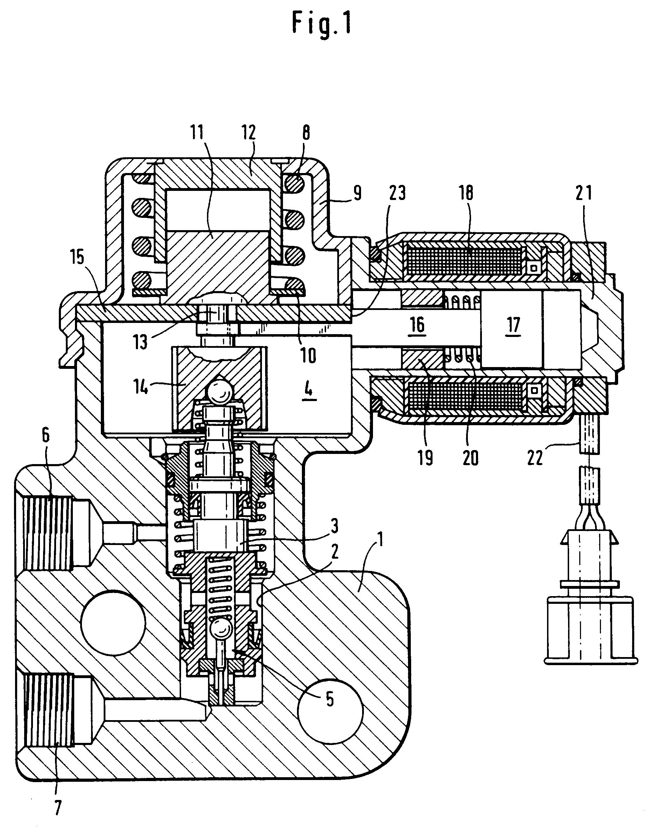

Der in Fig. 1 dargestellte Twin-Bremskraftregler besitzt im Gehäuse 1 zwei Stufenbohrungen, von denen nur eine, die Stufenbohrung 2 sichtbar ist, während die zweite sich deckungsgleich dahinter befindet. In der Stufenbohrung 2 ist der Regelkolben 3 zur Kammer 4 hin, welche druckmittelfrei ist und unter Atmosphärendruck steht, abgedichtet geführt. Im Regelkolben 3 ist das Regelventil 5 angeordnet, das sich, sobald der Regelkolben sich weit genug nach oben verschiebt, schließt. Es kontrolliert die Verbindung zwischen Einlaß 6 und Auslaß 7. Bei welchem Auslaßdruck sich das Regelventil 5 erstmalig schließt, ist in bekannter Weise von den Flächenverhältnissen des Regelkolbens 3 sowie von der Kraft der Steuerfeder 8 abhängig. Die Steuerfeder 8 stützt sich einerseits am Gehäusedeckel 9 ab und wirkt andererseits auf die Ringscheibe 10, die an einer Stufe des Führungskörpers 11 anliegt. Dieser Führungskörper 11 ist im Führungstopf 12 axial geführt, welcher mit dem Gehäusedeckel 9 starr verbunden ist. Der Führungskörper 11 setzt sich im Steuerstößel 13 fort, welcher über den Waagebalken 14 auf die Regelkolben gleichmäßig einwirkt.

Mit dem Gehäusedeckel 9 ist zwischen Führungskörper 11 und Waagebalken 14 die Anschlagplatte 15 gehäusefest verstemmt. Zwischen der Anschlagplatte 15 und dem Waagebalken 14 ragt das Sperrglied 16 radial in die Kammer 4, wo es U-förmig den Steuerstößel 13 umgreift. An seiner dem Steuerstößel 13 abgewandten Seite ist das Sperrglied 16 starr mit dem Magnetanker 17 verbunden. Dieser ist im inneren der elektrischen Spule 18 verschiebbar, wobei die Achse der elektrischen Spule 18 senkrecht zur Achse des Regelkolbens 3 verläuft. Zwischen Magnetanker 17 und der Kammer 4 ist im Inneren der Spule 18 die Anschlaghülse 19 angebracht, durch welche das Sperrglied 16 ragt. Diese Anschlaghülse 19 dient als Abstützung für die Rückstellfeder 20, welche den Magnetanker 17 bei stromloser Spule 18 von der Kammer 4 weg zur Stirnwand 21 drückt, welche einerseits dem Magnetanker 17 als Anschlag dient und andererseits das Innere der Spule nach außen hin abschließt.

Die Stromversorgung der elektrischen Spule erfolgt über das Kabel 22, wobei die Stromzufuhr vorzugsweise von der elektronischen Kontrolleinheit einer blockiergeschützten Bremsanlage gesteuert wird. Dabei soll die elektrische Spule 18 bei funktionierender Blockierschutzregelung stromdurchflossen sein, so daß die Druckminderfunktion außer Kraft gesetzt ist, während bei Ausfall der Blockierschutzanlage die elektrische Spule 18 stromlos wird, so daß der Magnetanker 17 von der Rückstellfeder 20 bis zur Stirnwand 21 geschoben wird und der Steuerstößel 13 freigegeben wird. Damit ist auch bei Ausfall der Blockierschutzfunktion zumindest eine Druckminderung an den Hinterachsbremsen möglich.

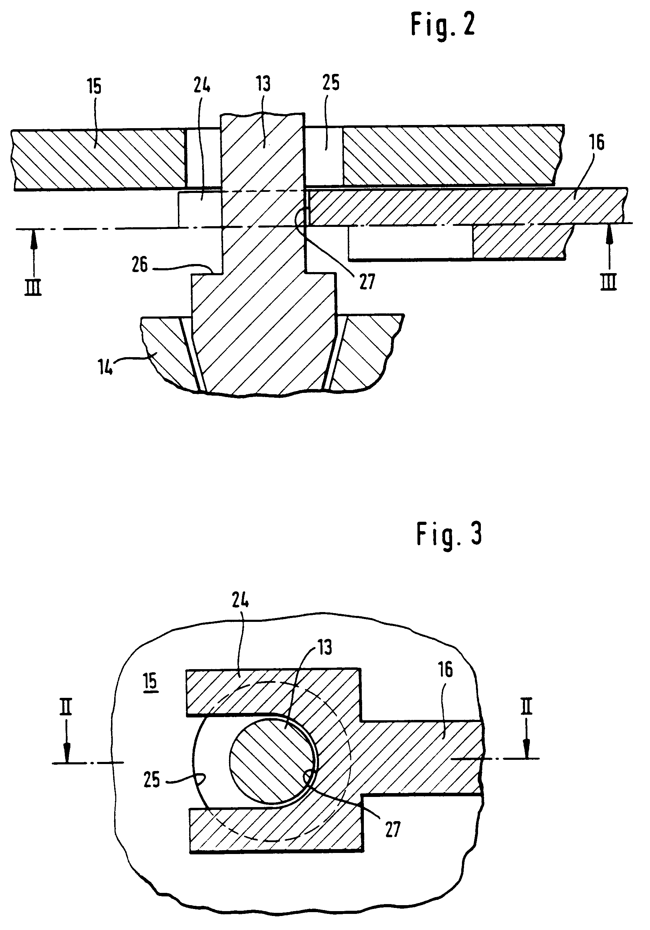

Fig. 2 zeigt einen Teilschnitt durch Steuerstößel 13, Anschlagplatte 15 und Sperrglied 16. Dabei ist das Sperrglied 16 in seinen zwei verschiedenen Positionen gezeigt. Die obere Hälfte des Sperrglieds 16 ist in ausgefahrener Stellung gezeichnet, während die untere Hälfte die zurückgezogene Stellung zeigt. Die genaue Lage des Sperrglieds 16 in ausgefahrener Stellung ist, wie in Fig. 1 erkennbar, durch die Stufe 23 bestimmt, die an der Anschlagplatte 15 in Anlage kommt. Die zurückgezogene Stellung des Sperrglieds 16 ist durch den Weg des Magnetankers 17 bis zur Stirnwand 21 festgelegt.

In ausgefahrener Stellung ist das Sperrglied 16 zwischen die Anschlagwand 15 und die Stufe 26 des Steuerstößels 13 geschoben. Dabei decken die Arme der Gabel 24 - wie auch in Fig. 3 dargestellt - das zentrale Loch 25 in der Anschlagplatte 15 ab, so daß die Gabel 24 vor Verformung durch von den Regelkolben her auftretende Kräfte geschützt ist. Die Rundung 27 der Gabel 24 paßt sich mit kleinem Spiel an den Umfang des Steuerstößels 13 an. Durch die Stufe 26 ist seine Bewegung nach oben durch das Sperrglied 16 gesperrt.

In zurückgezogener Stellung ist das Sperrglied 16 soweit vom Steuerstößel 13 entfernt, daß die Stufe 26 nicht mehr in Berührung mit der Gabel 24 kommt und das Loch 25 in der Anschlagplatte 15 vollständig frei liegt. Jetzt ist eine Druckminderfunktion des Bremskraftreglers möglich.

Obwohl bei dem im vorliegenden Ausführungsbeispiel beschriebenen Twin-Bremskraftregler keine Variation des Umschaltdruckes vorgesehen ist aufgrund der fest eingestellten Steuerfeder 8, kann die aus Steuerfeder 8, Ringscheibe 10, Führungskörper 11 und Führungstopf 12 bestehende fest eingestellte Ansteuervorrichtung auch durch eine an sich bekannte Hebelanordnung ersetzt werden. Die Funktionsweise des Sperrglieds 16 ist dadurch nicht beeinträchtigt, da in Ruhestellung das Regelventil 5 immer offen ist, d.h. der Regelkolben 3 befindet sich immer am unteren Anschlag. Das ist auch der Fall bei einer lastabhängigen Ansteuerung durch einen Hebel oder durch eine hydraulische lastabhängige Kraftbeaufschlagung des Steuerstößels 13.

### Bezugszeichenliste

- 1: Gehäuse
- 2: Stufenbohrung
- 3: Regelkolben
- 4: Kammer
- 5: Regelventil
- 6: Einlaß
- 7: Auslaß
- 8: Steuerfeder
- 9: Gehäusedeckel
- 10: Ringscheibe
- 11: Führungskörper
- 12: Führungstopf
- 13: Steuerstößel
- 14: Waagebalken
- 15: Anschlagplatte
- 16: Sperrglied
- 17: Magnetanker
- 18: elektrische Spule
- 19: Anschlaghülse
- 20: Rückstellfeder
- 21: Stirnwand
- 22: Kabel
- 23: Stufe
- 24: Gabel
- 25: Loch
- 26: Stufe
- 27: Rundung

## Patentansprüche

1. Twin-Bremskraftregeler mit zwei parallel in einem Gehäuse angeordneten Bohrungen (2), in denen jeweils abgedichtet ein Regelkolben (3) axial verschiebbar geführt ist, mit einer Ansteuervorrichtung, welche einen Steuerstößel (13) und einen Waagebalken (14) umfaßt, wobei der Steuerstößel (13) den Waagebalken (14) zentral mit einer axialen Steuerkraft beaufschlagt, die der Waagebalken (14) mit seinen beiden Armen jeweils auf einen Regelkolben (3) überträgt, und mit einer Sperrvorrichtung (16,17,18), welche eine elektrische Spule (18), einen darin verschiebbaren Magnetanker (17) und ein am Magnetanker (17) befestigtes, mit diesem bewegliches Sperrglied (16) aufweist, dadurch **gekennzeichnet**, daß die Sperrvorrichtung (16,17,18) radial angeordnet ist, so daß der Magnetanker (17) in bezug auf die Achsen der Gehäusebohrungen (2) radial beweglich ist und daß das Sperrglied (16) in ausgefahrener Stellung formschlüssig mit dem Steuerstößel (13) in Eingriff steht und in zurückgezogener Stellung den Steuerstößel (13) freigibt.

2. Twin-Bremskraftregler nach Anspruch 1, dadurch **gekennzeichnet**, daß der Magnetanker (17) bei stromdurchflossener Spule (18) das Sperrglied (16) in seiner ausgefahrenen Stellung hält.

3. Twin-Bremskraftregler nach Anspruch 1 oder 2, dadurch **gekennzeichnet**, daß das Sperrglied (16) an seinem dem Steuerstößel (13) zugewandten Ende eine U-förmige Gabel (24) aufweist, deren innere Rundung (27) dem Durchmesser des Steuerstößels (13) an der Eingriffstelle angepaßt ist, und daß der Steuerstößel (13) unmittelbar unterhalb der Eingriffstelle zum Waagebalken (14) hin eine stufige Verdickung (26) aufweist.

4. Twin-Bremskraftregler nach einem der vorhergehenden Ansprüche, dadurch **gekennzeichnet**, daß die Steuerkraft lastabhängig variierbar ist.

## Claims

1. A twin-type brake force regulator having two bores (2) arranged in parallel in a housing, a control piston (3) being axially slidably guided and sealed in each of the bores, including an actuating device having a control tappet (13) and a beam of balance (14), and the control tappet (13) centrally applies an axial control force to the beam of balance (14), and the control force is transmitted by both arms of the beam of balance (14) to each of the control pistons (3), and including a locking device (16, 17, 18) having an electric coil (18), a magnet armature (17) slidable in the coil and a locking member (16) which is attached to the magnet armature (17) and is movable with it,
**characterized** in that the locking device (16, 17, 18) is radially arranged so that the magnet armature (17) is radially movable with respect to the axes of the housing bores (2), and in that the locking member (16), in its advanced position, is in positive engagement with the control tappet (13) and, in its retracted position, releases the control tappet (13).

2. A twin-type brake force regulator as claimed in claim 1,
**characterized** in that the magnet armature (17) retains the locking member (16) in its advanced position when the coil (18) is energized.

3. A twin-type brake force regulator as claimed in claim 1 or in claim 2,
**characterized** in that, at its end close to the control tappet (13), the locking member (16) has a U-shaped fork (24), the inner curve (27) of which is adapted to the diameter of the control tappet (13) at the point of engagement, and in that the control tappet (13) has an enlarged portion with a step (26) directly beneath the point of engagement towards the beam of balance (14).

4. A twin-type brake force regulator as claimed in any one of the preceding claims,
**characterized** in that the control force is variable load-responsively.

## Revendications

1. Régulateur de force de freinage de type jumelé, comprenant deux alésages (2), qui sont disposés parallèlement dans un boîtier et dans chacun desquels un piston de régulation (3) est guidé axialement de manière coulissante et d'une façon étanche, un dispositif de commande, qui comprend un poussoir de commande (13) et un levier à deux bras (14), le poussoir de commande (13) appliquant, en position centrale sur le levier à deux bras (14), une force axiale de commande que le levier à deux bras (14) transmet à chacun des deux pistons de régulation (3) par son bras associé, et un dispositif de blocage (16, 17, 18) qui comprend une bobine électrique (18), une armature d'aimant (17), disposée d'une manière coulissante dans cette bobine, et un organe d'arrêt (16) fixé à l'armature d'aimant (17) et mobile avec cette dernière, caractérisé en ce que le dispositif d'arrêt (16, 17, 18) est disposé radialement, de sorte que l'armature d'aimant (17) est mobile radialement vis-à-vis des axes des perçages de boîtier (2) et en ce que l'organe d'arrêt (16) est, en position déployée, en prise sur le poussoir de commande (13) par complémentarité de formes et libère, en position rétractée, le poussoir de commande (13).

2. Régulateur de force de freinage de type jumelé selon la revendication 1, caractérisé en ce que l'armature d'aimant (17) tient l'organe d'arrêt (16) dans sa position déployée lorsque la bobine (18) est parcourue par le courant.

3. Régulateur de force de freinage de type jumelé selon l'une des revendications 1 ou 2, caractérisé en ce qu'à son extrémité tournée vers le poussoir de commande (13), l'organe d'arrêt (16) comporte une fourche en U (24) dont la partie arrondie intérieure (27) épouse la forme cylindrique du poussoir de commande (13) à l'emplacement de venue en prise et en ce que, directement au-dessous de l'emplacement de venue en prise, le poussoir de commande (13) comporte, du côté du levier à deux bras (14), une partie de plus grande épaisseur (26) formant un épaulement.

4. Régulateur de force de freinage de type jumelé selon l'une des revendications précédentes, caractérisé en ce que la force de commande peut varier d'une manière dépendant de la charge.
